# EUROPÄISCHE PATENTSCHRIFT

(11) **EP 0 682 588 B1**
(45) Veröffentlichungstag und Bekanntmachung des Hinweises auf die Patenterteilung: **06.08.1997**
(21) Anmeldenummer: 94906149.3
(22) Anmeldetag: 26.01.1994
(51) Int. Cl.: B23Q 11/10, G01N 13/02, B21B 45/02

(54) **VERFAHREN ZUR METALLBEARBEITUNG UNTER EINSATZ TENSIDHALTIGER KÜHLSCHMIERSTOFF-EMULSIONEN**
METALWORKING PROCESS USING COOLING-LUBRICANT EMULSIONS THAT CONTAIN SURFACTANTS
PROCEDE POUR L'USINAGE DES METAUX A L'AIDE D'EMULSIONS DE REFRIGERANT LUBRIFIANT CONTENANT DES TENSIOACTIFS

(30) Priorität: 04.02.1993 DE 4303133
(43) Veröffentlichungstag der Anmeldung: 22.11.1995
(73) Patentinhaber: Henkel Kommanditgesellschaft auf Aktien, 40191 Düsseldorf (DE)
(72) Erfinder: MÜLLER-KIRSCHBAUM, Thomas, D-42699 Solingen (DE); CORNELY, Richard, D-40589 Düsseldorf (DE); VIENENKÖTTER, Thomas, D-45277 Essen (DE)
(86) Internationale Anmeldenummer: EP9400206
(87) Internationale Veröffentlichungsnummer: WO9417954

(56) Entgegenhaltungen:
- WO-A-93/09269
- DD-A- 270 631
- US-A- 1 789 054
- US-A- 4 315 421

## Beschreibung

Die Erfindung betrifft ein Verfahren zur zerspanenden oder umformenden Metallbearbeitung, insbesondere zum Walzen, unter Einsatz tensidhaltiger wäßriger Kühlschmierstoff-Emulsionen, insbesondere Walzölemulsionen, wobei die Konzentration der Emulsion überwacht wird.

Die heutzutage üblichen hohen Zerspanungs- und Umform-Geschwindigkeiten bei der Metallbearbeitung erfordern hochwertige Kühlschmierstoffe. Die Stoffe unterscheidet man in nichtwassermischbare Kühlschmierstoffe, z. B. Schneidöle und Walzöle, und wassermischbare Kühlschmierstoffe, nämlich Kühlschmierstoff-Emulsionen. In geringerem Umfang werden auch wasserlösliche Kühlschmierstoffe eingesetzt. Die vorliegende Erfindung betrifft den Einsatz von Kühlschmierstoff-Emulsionen.

Bei den Kühlschmierstoff-Emulsionen handelt es sich um Öl-in-Wasser-Emulsionen, in denen das Öl tröpfchenförmig im Wasser verteilt ist. Als Öl wird dabei Mineralöl und/oder ein Esteröl eingesetzt. Die Kühlschmierstoff-Emulsion enthält außerdem üblicherweise unter anderem Emulgatoren, Korrosionsschutzzusätze, schmierungsverbessernde Zusätze, Netzmittel, Stabilisatoren, Entschäumer und Biozide. Die Emulsionen werden in der Form von Konzentraten angeboten, die vor der Anwendung mit Wasser gemischt werden.

Im folgenden wird insbesondere der Einsatz von Walzölemulsionen betrachtet, ohne daß die Erfindung darauf beschränkt sein soll. Hohe Walzgeschwindigkeiten bei sehr guter Planheit, eine verringerte Brandgefahr und ein verringerter Ölgehalt in der Abluft werden heutzutage durch die Verwendung von Walzölemulsionen an Stelle von Blankwalzölen erreicht. Die Konzentration der anwendungsfertigen Emulsionen liegt dabei zwischen 1 und 10 Vol.-%. Die Leistungsfähigkeit der Walzölemulsionen wird durch Zusatz von freien Fettsäuren oder Fettsäureestern wesentlich verbessert (erhöhtes Druckaufnahmevermögen). Emulgierbare Walzöle, also Emulsionskonzentrate enthalten daher neben Mineralöl anionaktive und/oder nichtionogene Emulgatoren (5 bis 20 %), walzaktive Zusätze, z. B. Fettsäuren, Fettsäureester oder Fettalkohole, sowie Lösungsvermittler für ein gute Lagerstabilität des Konzentrates.

Walzölemulsionen auf Mineralöl/Esteröl-Basis werden in niedrigen Konzentrationen, nämlich unter 10 Gew.-% insbesondere zur Dickenreduktion von Feinblech eingesetzt. Beim Walzvorgang ist ein möglichst gleichmäßiger und gleichzeitig trag- und schmierfähiger Walzölfilm zwischen den Walzen und dem Walzgut erforderlich. Ein niedriger Reibwert verbessert die Schmierung im Walzspalt, so daß Energieaufwand, Reibungswärme und Walzenverschleiß deutlich verringert werden. Gleichzeitig wird die Übertragung von Walzgut auf die Walze und die Bildung von Hitzestreifen auf dem Walzmaterial verhindert. Beim Walzen soll der Reibwert zwischen der Arbeitswalze und dem Walzgut aber auch nicht zu niedrig sein. Bei zu geringem Reibwert ist kein einwandfreier Abdruck der Walzenoberfläche auf das Walzgut gewährleistet. Das Walzgut rutscht auf der Walzenoberfläche, so daß die Walzgutoberfläche beschädigt wird.

Die gewünschten gleichmäßigen Arbeitsbedingungen erfordern eine gleichmäßige Qualität des eingesetzten Kühlschmierstoffs, dessen Eigenschaften regelmäßig überwacht werden müssen. Dies gilt insbesondere, da die Kühlschmierstoff-Emulsion aus einem oder mehreren Emulsionsreinbehältern über die verschiedenen Walzgerüste unter erhöhtem Druck bei möglichst konstanter Temperatur auf das Walzband bzw. auf die Walzen aufgetragen wird, von dort aus in die Schmutzbehälter abfließt und nach dem Passieren geeigneter Filter und Kühlaggregate wieder in die Emulsionsreinbehälter zurückgepumpt wird. Die Emulsion wird somit immer wieder im Kreis gefahren.

Die Anwendungstauglichkeit der Kühlschmierstoffemulsion kann während des Einsatzes aufgrund mehrerer Ursachen absinken. Der Kühlschmierstoff nimmt Fremdöle sowie metallische Partikel auf. Die Fremdöle können von vorangegangenen Korrosionsschutzbehandlungen der Werkstücke stammen. Metall- und Schmutzpartikel gelangen außerdem in die Kühlschmierstoff-Emulsion. Die Partikel befanden sich schon vor dem Zerspanungs- oder Umformvorgang auf der Oberfläche des Werkstücks oder es handelt sich um beim Umformvorgang selber entstehenden metallischen Abrieb. Eine ständige Entfernung dieser Partikel von der Werkstoffoberfläche ist gewährleistet, wenn die Waschwirkung des Kühlschmierstoffs, z. B. der Walzölemulsion, aufrechterhalten wird. Die Waschwirkung wird durch den Tensidanteil der Emulsion hervorgerufen.

Eine weitere Veränderung der Kühlschmierstoff-Emulsion hat ihre Ursache in der Wasserverdunstung, die insbesondere bei den erhöhten Betriebstemperaturen bei Walzvorgängen auftritt. Eine weitere Ursache für die Veränderung der Zusammensetzung der Kühlschmierstoff-Emulsion liegt in dem Ölverbrauch durch das auf dem Werkstück, insbesondere auf dem gewalzten Band, zurückbleibenden Öl.

Maßnahmen zur Reinigung der Kühlschmierstoff-Emulsion von eingetragenem Schmutz und Fremdöl verändern ebenfalls die Zusammensetzung, da gleichzeitig mit dem Schmutz auch Tenside, z. B. Netzmittel ausgetragen werden.

Alle diese Ursachen für eine Qualitätsverminderung des Kühlschmierstoffs machen eine laufende Überwachung notwendig.

Insbesondere bei Walzölemulsionen ist eine bestimmte Konzentrationseinstellung erforderlich, um einerseits eine definierte Schmier- und Kühlwirkung zu erreichen und andererseits möglichst wenig Walzöl auf dem Band zurückzulassen. Außerdem ist eine korrekte Konzentrationseinstellung für ein optimales Walzergebnis notwendig. Bisher wird die Konzentration des Walzöles durch regelmäßige Probenahme und über Lösungsmittelextraktion oder Säurespaltung der Emulsion bestimmt. Eine kontinuierliche Überwachung der Walzölkonzentration ist damit nicht möglich. Bei starken Veränderungen der Walzölemulsion zwischen den Prüfzeitpunkten können jedoch Fehler im Walzgut und damit große wirtschaftliche Schäden entstehen.

Ein weiteres bisher ungelöstes Problem liegt im Fehlen einer kontinuierlichen Überwachung der Zugabe von waschaktiven Substanzen, die beim Kaltwalzen von schwerverformbaren Stahlbändern erforderlich sind. Die waschaktiven Substanzen verhindern, daß bei Verwendung von rauhen Walzen der entstehende Walzabtrieb am Walzgerüst abgelagert wird. Außerdem wird die Qualität der Bandoberfläche beträchtlich erhöht.

Der Gehalt der Walzölemulsion an waschaktiven Substanzen wird bisher über aufwendige analytische Einzelbestimmungen ermittelt. Neben dem hohen personellen Aufwand bringen die punktuellen Messungen zusätzliche Nachteile mit sich, da eine ständige Zustandscharakterisierung der Walzölemulsion nicht möglich ist. Ein gezielter Eingriff auf das Walzergebnis mit einer schnellen Reaktion ist bei der beträchtlichen Verzögerung zwischen der Probenahme und dem Vorliegen des Meßergebnisses nicht möglich.

In der US-A-4,315,421 wird ein Verfahren zur automatischen Überwachung von wäßrigen Kühlschmierstoff-Emulsionen, die zur Metallbearbeitung, vorzugsweise zum Walzen, dienen, beschrieben. Bei diesem Verfahren wird kontinuierlich die Öl-Konzentration der Öl-in-Wasser Emulsion sowie deren Stabilität durch Bestimmung der Dichte dieser Emulsion kontrolliert. Hierbei wird kontinuierlich ein Teil der Emulsion durch eine entsprechende Meßzelle geleitet, die die Dichte der Emulsion mißt. Ein der Dichte proportionales elektrisches Signal wird einem entsprechenden Kontrollgerät zugeführt und hier mit einem vorgegebenen Sollwert verglichen. In Abhängigkeit vom ermittelten Vergleichsergebnis veranlaßt das Kontrollgerät automatisch geeignete Pflegemaßnahmen für die Emulsion, beispielsweise ein Nachdosieren von Öl oder von Emulgator zu der Emulsion.

Die WO-A-93/09269 betrifft ein Verfahren zum Entfetten und Reinigen metallischer Oberflächen mit einer tensidhaltigen wäßrigen Reinigungsflüssigkeit in Bädern und/oder mittels Spritzreinigung. Als Maß für die aktuelle Reinigungsreserve der Reinigungsflüssigkeit mißt man hierbei einen mit der dynamischen Oberflächenspannung korrelierten Wert mit einem Blasentensiometer, das mit hinreichend konstanten Gasströmen, insbesondere Luftströmen, betrieben wird. Die Meßwerte vergleicht man mit einem vorgegebenen Sollwert, den man mittels einer Eichung für das verwendete Reinigungsmittel erhalten hat, und führt in Abhängigkeit vom Vergleichsergebnis Pflegemaßnahmen für die Reinigungsflüssigkeit, insbesondere deren Aufarbeitung und/oder eine Nachdosierung des Reinigungsmittels, durch. Es sei darauf hingewiesen, daß diese Patentanmeldung unter Artikel 54(3) EPÜ fällt.

Aufgabe der Erfindung ist es demgegenüber, in dem Verfahren zur Metallbearbeitung unter Einsatz tensidhaltiger wäßriger Kühlschmierstoff-Emulsionen die Konzentrationsüberwachung der Emulsion kontinuierlich in einem On-line-Verfahren durchzuführen. Das Ergebnis sollte kontinuierlich registriert werden können. Insbesondere sollte die Waschwirkung und die Zugabe der waschaktiven Substanzen in dem On-line-Verfahren kontinuierlich bestimmt und registriert werden. Außerdem soll die Abnahme der Waschwirkung der Kühlschmierstoff-Emulsion bei einer Zugabe von Anschmutzungen, z.B. bei einem Eintrag von Hydrauliköl oder anderen Fremdölen, erfaßt werden können, obwohl in diesem Fall die Konzentration der Tenside nicht absinkt.

Zur erfindungsgemäßen Lösung der Aufgabe mißt man als Maß für die Konzentration der Emulsion und/oder für den Tensidgehalt und/oder für die Waschwirkung der Emulsion einen mit der dynamischen Oberflächenspannung korrelierten Wert mit einem Blasen-Tensiometer, das mit hinreichend konstanten Gasströmen, insbesondere Luftströmen, betrieben wird, vergleicht die Meßwerte mit einem vorgegebenen Sollwert, den man mittels einer Eichung für die eingesetzte Kühlschmierstoff-Emulsion erhalten hat, und führt in Abhängigkeit vom Vergleichsergebnis Pflegemaßnahmen für die Emulsion durch. Unter dem Begriff "Pflegemaßnahmen" sind alle Maßnahmen zu verstehen, die zu einer Wiederherstellung der gebrauchten Kühlschmierstoff-Emulsion sinnvoll sind.

Überraschenderweise hat sich gezeigt, daß die mit einem Blasen-Tensiometer erhaltenen Meßwerte auch bei unterschiedlichen Emulsionen einen sehr eng mit der Emulsionskonzentration bzw. der Waschwirkung bzw. der Tensid-Konzentration korrelierten Wert liefern, so daß eine sehr genaue Überwachung tensidhaltiger Kühlschmierstoff-Emulsionen möglich ist. Weder der Einsatz in Emulsionen noch die darin enthaltenen Verschmutzungen beeinträchtigen die Wirksamkeit des erfindungsgemäßen Verfahrens. Die Funktionstüchtigkeit des Verfahrens ist auch deshalb überraschend, weil eine Messung der Tensidkonzentration mittels statischer Oberflächenspannungsmessungen im vorliegenden Fall nur zu unzureichenden Ergebnissen führen. Eine Erklärung des Effekts kann möglicherweise darin liegen, daß die relativ hohen Tensidkonzentrationen in den Kühlschmierstoff-Emulsionen oft die kritische Mizellbildungskonzentration überschreiten und damit statische Oberflächenspannungsmessungen versagen. Dagegen können mit dem Blasen-Tensiometer auch oberhalb der kritischen Mizellbildungskonzentration Unterschiede im Ausgangssignal festgestellt werden, wenn die Tensidkonzentration sich ändert.

Das genannte Blasen-Tensiometer ist an sich bekannt und z. B. von F.J. Schork und W.H. Rey in "Journal of Applied Polymer Science", Vol. 28, 1983, Seiten 407 bis 430 beschrieben und soll daher an dieser Stelle nicht näher erläutert werden.

Die erfindungsgemäße Möglichkeit, mit ein und demselben Meßaufbau und in ein und demselben Verfahren zum einen die Konzentration des in einer frischen oder gebrauchten Kühlschmierstoff-Emulsion enthaltenen Emulsionskonzentrats, zum anderen die Waschwirkung einer anwendungsfertigen oder gebrauchten Kühlschmierstoff-Emulsion und drittens die Tensidkonzentration in einer solchen Emulsion zu messen, wird im folgenden näher erläutert.

Bei den in der Kühlschmierstoff-Emulsion enthaltenen Tensiden ist zwischen freien, mizellar gebundenen und an Öl/Fett oder Anschmutzungen gebundenen Tensidanteilen zu unterscheiden. Die freien und die mizellar gebundenen Tensidanteile sind in der Emulsion so frei beweglich, daß sie in die Grenzfläche zwischen dem Wasser und den fortlaufend gebildeten Luftblasen ausreichend schnell hineindiffundieren können und damit zum Meßsignal des Blasen-Tensiometers beitragen. Dagegen sind die an Öl/Fett und Anschmutzungen gebundenen Tensidanteile, die z. B. auch zur Emulgierung der in der Emulsion enthaltenden Öle beitragen, nicht ausreichend schnell beweglich, um der sich fortlaufend ändernden Grenzfläche zwischen Wasser und Luft folgen zu können. Diese Tensidanteile beeinflussen daher nicht das Meßsignal des Blasen-Tensiometers.

Als Waschwirkung wird die Eignung der Emulsion bezeichnet, Anschmutzungen aufzunehmen und in der Flüssigkeit zu halten. Je höher die Konzentration der freien und der in mizellarer Form gebundenen Tenside in der Emulsion ist, desto größer ist auch ihre Waschwirkung. Werden weitere Anschmutzungen in die Emulsion eingetragen, so werden vermehrt freie oder mizellar gebundene Tenside zur Emulgierung der Anschmutzungen, z. B. von Fettpartikel oder Tropfen von Fremdöl, benötigt. Die vom Blasen-Tensiometer erfaßbare Konzentration an freien und mizellar gebundenen Tensiden sinkt ab. Auf diese Weise kann aus der Veränderung des Signals des Blasen-Tensiometers auf eine entsprechende Veränderung der Waschwirkung der Emulsion geschlossen werden. Auch die quantitative Erfassung der Änderung der Waschwirkung ist damit möglich.

Eine weitere interessante Größe läßt sich bei Kenntnis der Konzentration der Tenside im eingesetzten Emulsionskonzentrat messen. Unter der Bedingung, daß keine oder nur geringe Anschmutzungen in der Emulsion vorhanden und damit fast alle Tensidanteile in freier oder mizellar gebundener Form vorliegen, läßt sich die in der Emulsion enthaltene Gesamtkonzentration an Tensiden mit dem Blasen-Tensiometer messen. Zusammen mit dem Wert für die Konzentration der im eingesetzten Emulsionskonzentrat enthaltenen Tenside läßt sich dann die Konzentration des Emulsionskonzentrats in der anwendungsfertigen oder gebrauchten Emulsion bestimmen.

Beim Betrieb des Blasen-Tensiometers mit einer einzigen, die Blasen erzeugenden Kapillare eignen sich mehrere Meßgrößen als Ausgangssignale, die direkt mit der Emulsionskonzentration, bzw. der Waschwirkung bzw. der Tensidkonzentration verknüpft werden können. Es kann sich dabei um die Blasenfrequenz oder die maximalen oder minimalen Blasendrücke oder die Differenz zwischen maximalem und minimalem Blasendruck handeln, die als Meßwerte zur Charakterisierung der Emulsion herangezogen werden können.

Noch vorteilhafter ist es, wenn man das Blasen-Tensiometer mit zwei die Blasen erzeugenden Kapillaren mit unterschiedlich weiten Öffnungen und mit gleicher Eintauchtiefe betreibt und die Differenz der Blasendrücke beider Kapillaren als Meßwerte heranzieht. Mit fallender dynamischer Oberflächenspannung nimmt auch die Druckdifferenz ab. Der große verfahrenstechnische Vorteil liegt insbesondere in der Kompensation des hydrostatischen Drucks, so daß das Meßsignal unabhängig von der Eintauchtiefe ist. Die dynamische Oberflächenspannung ist mit der gemessenen Druckdifferenz über einen linearen Zusammenhang verknüpft, so daß die dynamische Oberflächenspannung - bis auf ein konstanten Summanden - proportional zur Druckdifferenz ist. Die beiden, in der entsprechenden Formel auftauchenden Konstanten können über eine Mehrpunktkalibrierung mit Hilfe reiner und vollständig mischbarer Flüssigkeiten, z.B. Wasser und Ethanol, für eine gegebene Meßanordnung bestimmt werden.

Zum Meßverfahren selber wird vorgeschlagen, daß man Einzelmessungen in zeitlichen Abständen von maximal 10 Sekunden vornimmt und entweder die Einzelmeßwerte selber oder deren Mittelwerte zur Charakterisierung der Emulsion heranzieht. Die Mittelwerte werden vorteilhaft in zeitlichen Abständen von maximal einer Minute aus den Einzelmessungen gebildet.

Im erfindungsgemäßen Verfahren hat sich außerdem besonders bewährt, wenn der Öffnungsdurchmesser der engen Kapillare 0,05 bis 3 mm und der der weiten Kapillare 3 bis 20 mm beträgt. Das Blasen-Tensiometer kann mit unterschiedlichen Gasen, insbesondere mit Stickstoff oder Edelgasen und besonders bevorzugt mit Luft als Arbeitsgas betrieben werden, wobei Volumenströme von 0,5 bis 50 ml/min vorgeschlagen werden.

Die Messung selber kann direkt in der Lösung, also im Maschinentank, vorgenommen werden. Vorteilhafter ist es jedoch, die Messung im Bypaß durchzuführen.

Nachfolgend werden Ausführungsbeispiele und Versuchsergebnisse im Rahmen des erfindungsgemäßen Verfahrens und anhand von Zeichnungen näher beschrieben. Es zeigen
- Figur 1: den schematischen Aufbau einer Meßeinrichtung mit einem Blasen-Tensiometer, das zur Durchführung des erfindungsgemäßen Verfahrens geeignet ist,
- Figur 2: eine graphische Darstellung der bei der Messung des Differenzdruckes in einer Walzölemulsion erhaltenen Meßwerte, aufgetragen über der auf andere Weise bestimmten Walzöl-Konzentration,
- Figur 3: eine graphische Darstellung von bei einer Betriebssimulation erhaltenen Meßwerten, wobei der Differenzdruck über der Zeit aufgetragen ist,
- Figur 4: eine graphische Darstellung von bei einer Langzeltmessung in einer Betriebssimulation erhaltenen Werte, wobei wiederum der Differenzdruck gegen die Zeit aufgetragen wurde,
- Figur 5: eine graphische Darstellung von gemessenen Differenzdrücken, aufgetragen über der Menge an zugegebenem Netzmittel, bei verschiedenen Walzöl-Konzentrationen und
- Figur 6: die über der Zeit aufgetragenen Differenzdrücke, die bei einer Betriebssimulation mit einer dreimaligen Zugabe von Netzmittel erhalten wurden.

Zunächst wird die Methode des Differenzdrucks der Blasen zur Messung der Oberflächenspannung näher erläutert. Im einfachsten Fall des Blasen-Tensiometers taucht eine Kapillare senkrecht in die zu untersuchende Flüssigkeit ein. Durch die Kapillare strömt ein Gas, z. B. Luft, das am unteren Ende eine Gasblase entstehen läßt. Der zur Überwindung der Oberflächenspannung notwendige Druck erreicht bei einer bestimmten Größe der Blase einen Maximalwert, um bei weiterer Vergrößerung wieder abzusinken.

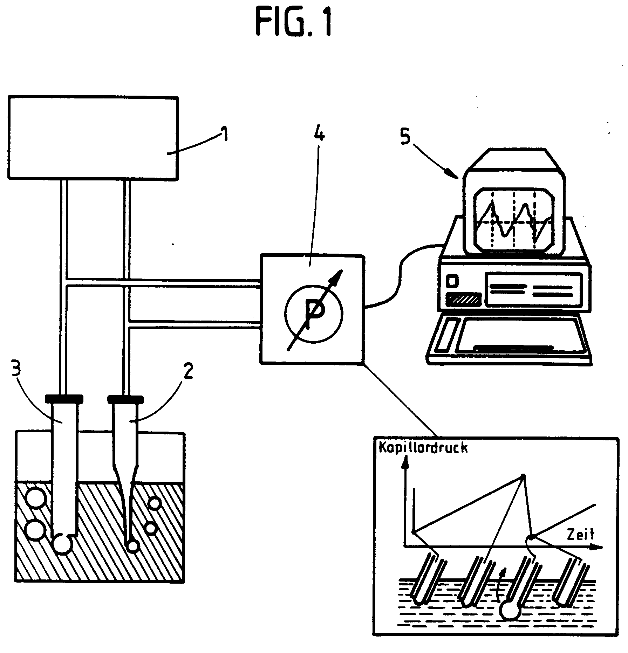

Ist der Kapillarenradius sehr klein, so hat die Blase beim Druckmaximum annähernd die Form einer Halbkugel mit dem Radius der Kapillare. Das Fenster unten rechts in Figur 1 zeigt den zeitabhängigen Druckverlauf in der Kapillare bei regelmäßiger Blasenbildung. Die Oberflächenspannung der Flüssigkeit (genauer: die Grenzflächenspannung zwischen Wasser und Gas - hier: Luft) hängt dann gemäß der Laplace-Gleichung vom Druck und vom Radius der Blase ab.

Oberflächenaktive Substanzen adsorbieren bei der Blasenbildung bevorzugt an der Grenzfläche Wasser/Luft und vermindern die Oberflächenspannung. Die Folge ist eine geringere Größe der entstehenden Blasen. Bei konstantem Luftstrom führt dies zum Auftreten von mehr Blasen pro Zeiteinheit und zum Abfallen des zur Blasenbildung notwendigen Drucks.

Da sich während der Blasenbildung die Oberfläche, die für die Adsorption von oberflächenaktiven Stoffen zur Verfügung steht, fortlaufend vergrößert, kann sich kein Gleichgewicht zwischen den an der Oberfläche adsorbierten und den in der Lösung befindlichen Einzeltensidmolekülen einstellen. Daher wird mit der Methode das maximalen Blasendrucks die dynamische Oberflächenspannung gemessen, im Gegensatz zur statischen Oberflächenspannung, die nur unter Gleichgewichtsbedingungen (z. B. mit Ringmethode der Wilhelmy-Verfahren) ermittelt werden kann.

Da sich während der Messung das untere Ende der Kapillare unterhalb der Flüssigkeitsoberfläche befindet, muß in der oben genannten Laplace-Gleichung zusätzlich der hydrostatische Druck berücksichtigt werden. Die Meßmethode wird von der Eintauchtiefe unabhängig, wenn man zwei Kapillaren von verschiedenem Öffnungs-Radius gleich tief eintauchen läßt und die Differenz der Maximaldrücke für beide Kapillaren bestimmt. Diese Variante ist in Figur 1 dargestellt.

Mit dem in Figur 1 gezeigten Aufbau eines Blasen-Tensiometers wurden die nachfolgend beschriebenen Versuchsergebnisse gewonnen. Von einer Einrichtung 1 zur Erzeugung eines konstanten Druckluftstroms wird Luft über zwei Kapillaren 2,3 mit unterschiedlich großen Öffnungsdurchmessern in die zu messende Lösung eingeleitet. Die Luft entweicht im Form von Blasen aus den unteren Enden der Kapillaren. Bei der Lösung kann es sich z.B. um eine Walzölemulsion handeln. Die Druckdifferenz in den beiden Zuluftleitungen wird mittels eines Differenzdruckmessers 4 erfaßt und als elektrisch weiterverarbeitbares Signal in eine zentrale Recheneinheit, z.B. einen Personal-Computer 5 oder eine andere zur Prozeßsteuerung geeignete elektronische Einrichtung übertragen. Der Druck in den Kapillaren in Abhängigkeit von der Zeit ist ferner in Figur 1 unten rechts dargestellt.

Überschreitet oder unterschreitet das aufgearbeitete Meßsignal vorgewählte Grenzwerte, so werden Alarmsignale wegen Unterschreitung einer vorgewählten Walzölkonzentration bzw. Tensidkonzentration gegeben oder unmittelbar eine Nachdosierung der fehlenden Anteile sowie alle weiteren Maßnahmen veranlaßt, die zur Aufrechterhaltung der geforderten Eigenschaften der Walzölemulsion und der Erhaltung der Waschwirkung notwendig sind.

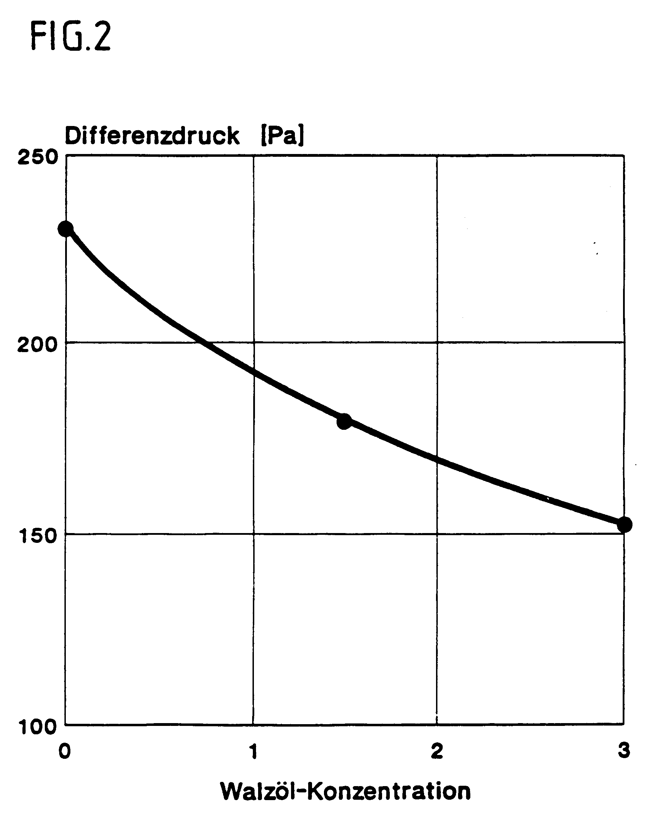

Figur 2 zeigt beispielhaft, wie mit steigender Walzölemulsionskonzentration das Druckmeßsignal des Blasen-Tensiometers abnimmt. Die verwendete Walzölemulsion, nämlich "Sphinx RL 217 HH 3" der Fa. Sphinx Chemical GmbH, lag in Konzentrationen von 1,5 Gew.-% und 3 Gew.-% vor. Die Messungen wurden bei einer Temperatur der Lösung von 40 °C durchgeführt.

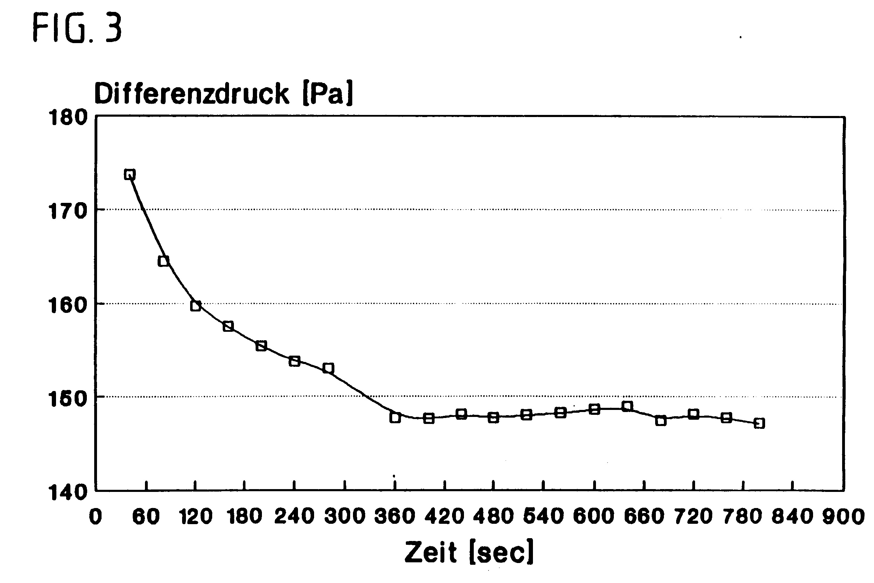

Figur 3 zeigt diesen Effekt im Rahmen eines Versuches, der einen betrieblichen Ablauf simuliert. Die On-line Messung umfaßte eine 15minütige Startphase. Zur Erhöhung der Genauigkeit wurden die kontinuierlich im Abstand von wenigen Sekunden anfallenden Einzelmeßwerte über 40 Sekunden gemittelt. In eine ständig umgepumpte, auf 51 °C temperierte Lösung von etwa 10 Litern, die anfänglich nur vollentsalztes Wasser enthielt, wurde 2,5 Gew.-% der Walzölemulsion "Sphinx RL 217 HH 3" (Produkt der Fa. Sphinx Chemical GmbH) gegeben. Die allmähliche Verteilung der Walzölemulsion im Kühl-Schmier-System wird deutlich durch das Absinken des Differenzdrucks und kann auf diese Weise gut verfolgt werden. Nach etwa 6 Minuten änderte sich der Differenzdruck kaum noch und die Walzölemulsion hatte sich im Kühl-Schmier-System gleichmäßig verteilt.

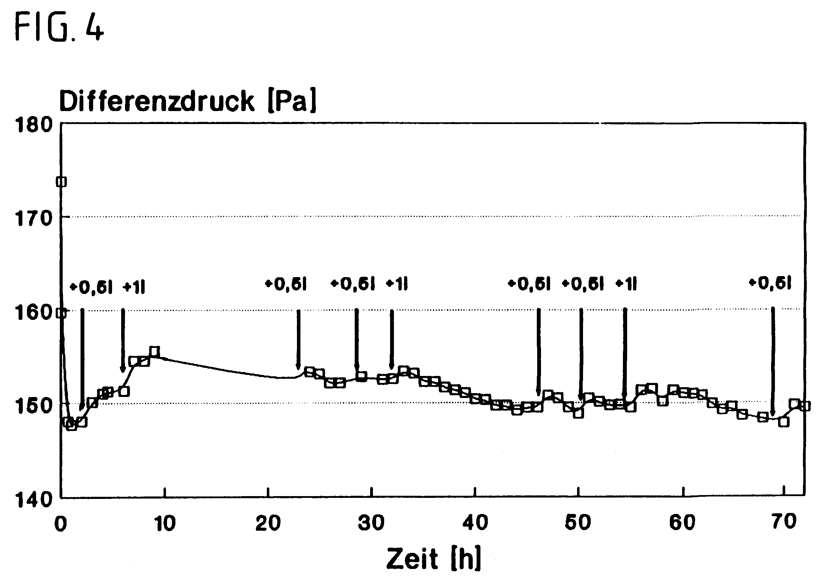

Figur 4 zeigt einen Langzeitversuch über mehr als 70 Stunden. Die Angaben zum Versuch entsprechend Figur 3 gelten auch hier. Messungen des Differenzdruckes wurden in Abständen von 15 Minuten durchgeführt. Zu Beginn betrug die Walzölemulsionskonzentration ebenfalls 2,5 Gew.-%. Deutlich erkennbar ist die Zunahme des Drucks bei der Verdünnung der Lösung mit Wasser. Die Zugaben von jeweils 0,5 und 1 l sind in Figur 4 durch vertikale Pfeile angezeigt. Die Abnahme des Differenzdrucks zwischen den Wasserzugaben ist auf die Aufkonzentrierung der Lösung durch Wasserverdunstung zurückzuführen.

Die nachfolgenden Beispiele zeigen, daß mit dem erfindungsgemäßen Verfahren die Konzentration eines Waschtensids in der Walzölemulsion meßbar ist.

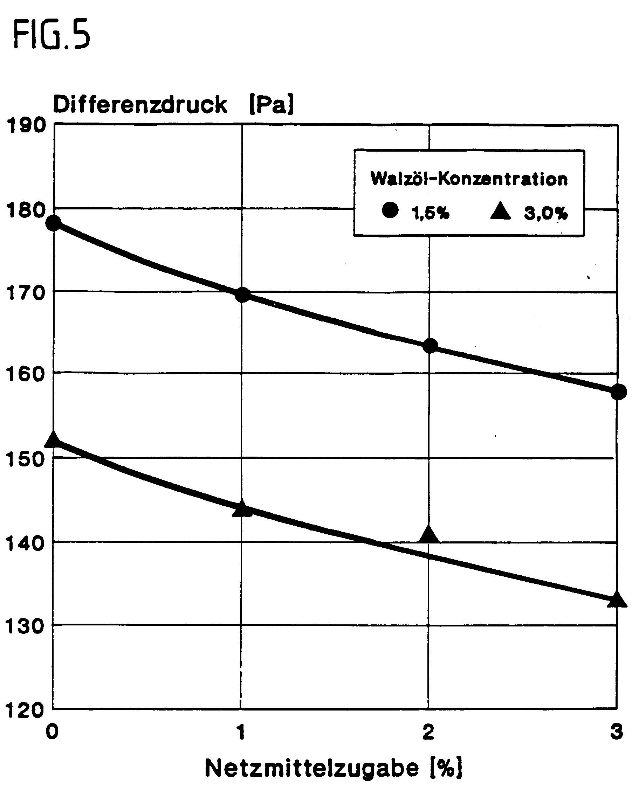

In zwei unterschiedlich konzentrierte Walzölemulsionen "Sphinx RL 217 HH 3" (Produkt der Fa. Sphinx Chemical GmbH) mit 1,5 Gew.-% und 3 Gew.-%, wobei die entsprechenden Meßwerte durch Kreise bzw. durch Dreiecke dargestellt sind, wurde das Tensid "Sphinx RL 101" (ebenfalls ein Produkt der Fa. Sphinx Chemical GmbH), ein Netzmittel, in drei Konzentrationsschritten mit jeweils 1 Gew.-% zugegeben. Figur 5 zeigt die in beiden Fällen registrierte Abnahme des Differenzdrucks. Die Messungen wurden in 40 °C warmen Emulsionen durchgeführt.

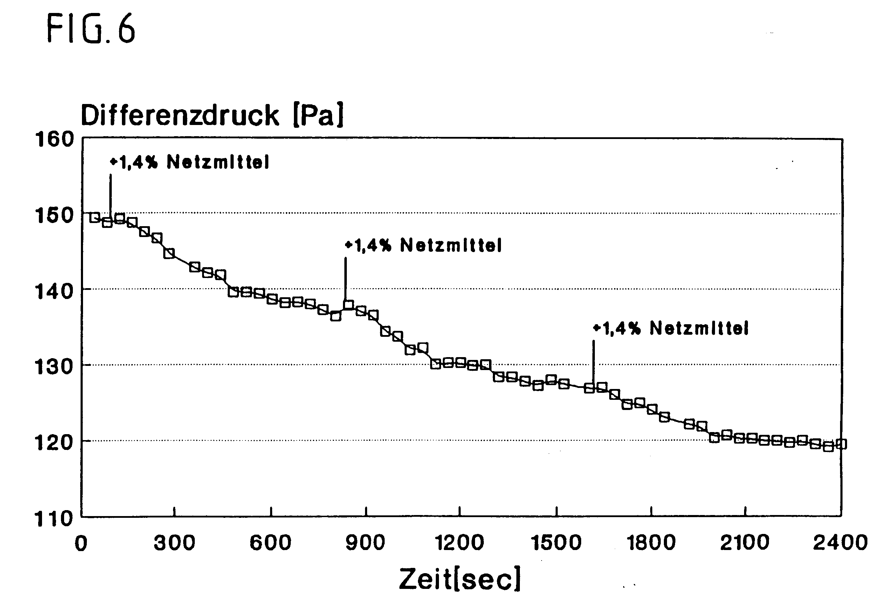

In einer betrieblichen Simulation wurden innerhalb von 40 Minuten jeweils dreimal 1,4 Gew.-% des Netzmittels "Sphinx RL 101", bezogen auf das Walzölemulsionskonzentrat, zur umgepumpten, 2,5 %igen Walzölemulsion "Sphinx RL 217 HH 3" gegeben (Figur 6). Die Emulsion war auf etwa 50 °C temperiert und hatte ein Volumen von etwa 10 Litern. Die Zugabe ist durch vertikale Linien in der Graphik markiert. Das nach jeder Zugabe des Netzmittels bewirkte Ansteigen der Waschwirkung der Walzölemulsion zeigt sich deutlich im Absinken des gemessenen Differenzdrucks.

Der Eintrag von Verschmutzungen, z.B. von Hydrauliköl und anderen Fremdölen, vermindert die Waschwirkung wieder. Dieser Effekt ist meßbar durch den Anstieg des Differenzdrucks, wie aus Figur 6 hervorgeht. Die Verminderung der Waschwirkung kann daher mit dem erfindungsgemäßen Verfahren nachgewiesen werden. Die Zufuhr einer geeigneten Menge Netzmittel reduziert die dynamische Oberflächenspannung wieder und erhöht die Waschwirkung auf das gewünschte Ausgangsniveau. Das Netzmittel wird solange zudosiert, bis das Meßsignal des Blasen-Tensiometers den vor dem Schmutzeintrag gemessenen niedrigen Ausgangswert des Differenzdruck hat.

Damit eignet sich das Blasen-Tensiometer zur Bestimmung der Konzentration von Walzölemulsionen und den in diesen enthaltenen oder zugesetzten waschaktiven Substanzen sowie zur kontinuierlichen Überwachung der Waschwirkung.

## Patentansprüche

1. Verfahren zur zerspanenden oder umformenden Metallbearbeitung, insbesondere zum Walzen, unter Einsatz tensidhaltiger wäßriger Kühlschmierstoff-Emulsionen, insbesondere Walzölemulsionen, wobei die Konzentration der Emulsion überwacht wird und wobei man als Maß für die Konzentration der Emulsion und/oder für den Tensidgehalt und/oder für die aktuelle Waschwirkung der Emulsion einen mit der dynamischen Oberflächenspannung korrelierten Wert mit einem Blasen-Tensiometer mißt, das mit hinreichend konstanten Gasströmen, insbesondere Luftströmen, betrieben wird, die Meßwerte mit einem vorgegebenen Sollwert vergleicht, den man mittels einer Eichung für die eingesetzte Kühlschmierstoff-Emulsion erhalten hat, und in Abhängigkeit vom Vergleichsergebnis Pflegemaßnahmen für die Emulsion durchführt.

2. Verfahren nach Anspruch 1,
dadurch gekennzeichnet,
daß man das Blasen-Tensiometer mit einer einzigen die Blasen erzeugenden Kapillare betreibt und die Blasenfrequenz oder die maximalen oder minimalen Blasendrücke oder die Differenz zwischen maximalem und minimalem Blasendruck als Meßwerte zur Charakterisierung der Emulsion heranzieht.

3. Verfahren nach Anspruch 1,
dadurch gekennzeichnet,
daß man das Blasen-Tensiometer mit zwei die Blasen erzeugenden Kapillaren mit unterschiedlich weiten Öffnungen und mit gleicher Eintauchtiefe betreibt und die Differenz der Blasendrücke beider Kapillaren als Meßwert zur Charakterisierung der Emulsion heranzieht.

4. Verfahren nach einem der Ansprüche 1 bis 3,
dadurch gekennzeichnet,
daß man Einzelmessungen in zeitlichen Abständen von maximal 10 s vornimmt und die Einzelmeßwerte zur Charakterisierung der Emulsion heranzieht.

5. Verfahren nach einem der Ansprüche 1 bis 4,
dadurch gekennzeichnet,
daß man in zeitlichen Abständen von maximal 1 min Mittelwerte von Einzelmessungen bildet und die Mittelwerte zur Charakterisierung der Emulsion heranzieht.

6. Verfahren nach einem der Ansprüche 3 bis 5,
dadurch gekennzeichnet,
daß der Öffnungsdurchmesser der engen Kapillare 0,05 bis 3 mm und der der weiten Kapillare 3 bis 20 mm beträgt.

7. Verfahren nach einem der Ansprüche 1 bis 6,
dadurch gekennzeichnet,
daß man das Blasen-Tensiometer mit Stickstoff, Edelgasen, und vorzugsweise mit Luft, als Arbeitsgas bei Volumenströmen von 0,5 bis 50 ml/min betreibt.

8. Verfahren nach einem der Ansprüche 1 bis 7,
dadurch gekennzeichnet,
daß man die Messung im Bypaß vornimmt.

## Claims

1. A process for machining or forming, more particularly rolling, metals using surfactant-containing aqueous cooling lubricant emulsions, more particularly rolling oil emulsions, the concentration of the emulsion being monitored and a value correlated with the dynamic surface tension being measured with a bubble tensiometer operated with sufficiently constant gas streams, more particularly air streams, as a measure of the concentration of the emulsion and/or the surfactant content and/or the current washing effect of the emulsion, the results obtained being compared with a predetermined set value obtained by calibration for the cooling lubricant emulsion used and care measures for the emulsion being carried out in dependence upon the result of the comparison.

2. A process as claimed in claim 1, characterized in that the bubble tensiometer is operated with a single capillary producing the bubbles and the bubble frequency or the maximum or minimum bubble pressures or the difference between the maximum and minimum bubble pressure being used as measured values for characterizing the emulsion.

3. A process as claimed in claim 1, characterized in that the bubble tensiometer is operated with two capillaries having bores of different diameter but the same depth of penetration which produce the bubbles and the difference between the bubble pressures of the two capillaries is used as a measured value for characterizing the emulsion.

4. A process as claimed in any of claims 1 to 3, characterized in that individual measurements are carried out at time intervals of at most 10 s and the individual measured values are used to characterize the emulsion.

5. A process as claimed in any of claims 1 to 4, characterized in that average values of individual measurements are formed at time intervals of at most 1 minute and the average values are used to characterize the emulsion.

6. A process as claimed in any of claims 3 to 5, characterized in that the bore diameter of the narrow capillary is 0.05 to 3 mm while the bore diameter of the wide capillary is 3 to 20 mm.

7. A process as claimed in any of claims 1 to 6, characterized in that the bubble tensiometer is operated with nitrogen, noble gases and preferably with air as the working gas at volumetric flow rates of 0.5 to 50 ml/min.

8. A process as claimed in any of claims 1 to 7, characterized in that the measurement is carried out in a bypass.

## Revendications

1. Procédé pour l'usinage des métaux avec ou sans enlèvement de copeaux, en particulier pour le laminage, utilisant des émulsions aqueuses de lubrifiant réfrigérant contenant des tensioactifs, en particulier des émulsions d'huiles de laminage, dont la concentration est contrôlée et où l'on mesure une valeur corrélée à la tension superficielle dynamique comme grandeur représentative de la concentration de l'émulsion et/ou de la teneur en tensioactifs et/ou de l'effet détergent de l'émulsion, à l'aide d'un tensiomètre à bulles que l'on fait fonctionner avec des flux gazeux suffisamment constants, en particulier des flux d'air, où l'on compare les résultats expérimentaux à une valeur nominale prédéterminée obtenue au moyen d'une calibration avec l'émulsion de lubrifiant réfrigérant utilisée et où l'on réalise des mesures d'entretien de l'émulsion en fonction du résultat de la comparaison.

2. Procédé selon la revendication 1,
caractérisé en ce que
l'on fait fonctionner le tensiomètre à bulles avec un seul capillaire créant des bulles et que l'on utilise pour la caractérisation de l'émulsion la fréquence des bulles ou les pressions minimales ou maximales de bulles ou la différence entre la pression maximale et minimale de bulles.

3. Procédé selon la revendication 1,
caractérisé en ce que
l'on fait fonctionner le tensiomètre à bulles avec deux capillaires créant des bulles ayant deux ouvertures de taille différente et de même profondeur d'immersion, et que l'on utilise la différence entre la pression de bulles des deux capillaires comme valeur de mesure pour la caractérisation de l'émulsion.

4. Procédé selon l'une des revendications 1 à 3,
caractérisé en ce que
l'on effectue des mesures espacées de 10 s au plus et que l'on utilise celles-ci pour la caractérisation de l'émulsion.

5. Procédé selon l'une des revendications 1 à 4,
caractérisé en ce que
l'on calcule la moyenne des mesures sur 1 min. au plus et que l'on utilise les moyennes pour la caractérisation de l'émulsion.

6. Procédé selon l'une des revendications 1 à 5,
caractérisé en ce que
le diamètre d'ouverture du capillaire fin est compris entre 0,05 et 3 mm et celui du capillaire large est compris entre 3 et 20 mm.

7. Procédé selon l'une des revendications 1 à 6,
caractérisé en ce que
l'on fait fonctionner le tensiomètre à bulles avec de l'azote, des gaz nobles, de préférence avec de l'air comme gaz de travail, où les flux volumiques sont compris entre 0,5 et 50 ml/min.

8. Procédé selon l'une des revendications 1 à 7,
caractérisé en ce que
la mesure est effectuée en by-pass.
